Europäisches Patentamt

European Patent Office

Office européen des brevets

(11) Numéro de publication: **0 182 151**
**A1**

(12) **DEMANDE DE BREVET EUROPEEN**

(21) Numéro de dépôt: **85113740.6**

(22) Date de dépôt: **29.10.85**

(51) Int. Cl.⁴: **B 65 G 51/20,** B 65 G 51/32

(30) Priorité: **21.11.84 FR 8417741**

(43) Date de publication de la demande: **28.05.86**
**Bulletin 86/22**

(84) Etats contractants désignés: **AT CH DE GB LI**

(71) Demandeur: **C.P. Bourg S.A., 22, rue de Franquenies,**
**B-1340 Ottignies (BE)**

(72) Inventeur: **Paulus, Jean J.H., rue de la Houssière 73,**
**B-5873 Hevillers (BE)**

(74) Mandataire: **Degwert, Hartmut, Dipl.-Phys., Patent**
**Attorneys Prinz, Leiser, Bunke & Partner**
**Ernsbergerstrasse 19, D-8000 München 60 (DE)**

(54) **Station à tronçon de tube pivotant pour une installation de transpot pneumatique.**

㊼ La station comporte un tronçon de tube pivotant (16) mobile entre une position de passage en alignement avec un tube de transport (10, 12) de l'installation et une position de réception ou d'expédition inclinée par rapport au tube de transport. Dans sa position inclinée, le tronçon de tube (16) constitue un déflecteur d'un objet transporté tel qu'une cartouche (30) vers un récipient de réception (32) selon un trajet de réception.

Un organe de freinage progressif (34) du mouvement d'un objet reçu est associé au tronçon de tube pivotant (16). Cet organe de freinage (34) est mobile en synchronisme avec le mouvement du tronçon de tube pivotant (16) entre une position de freinage dans laquelle il forme, avec le tronçon de tube pivotant (16) devenu déflecteur dans sa position inclinée, un étranglement du trajet de réception, et une position de dégagement de ce trajet de réception qu'il prend lorsque le tronçon de tube pivotant (16) se trouve dans sa position alignée avec le tube de transport (10, 12).

Application à une installation de transport pneumatique.

La présente invention concerne une station à tronçon de tube pivotant pour une installation de transport pneumatique, le tronçon de tube pivotant étant mobile entre une position de passage en alignement avec un tube de transport de l'installation et une position de réception ou d'expédition inclinée par rapport au tube de transport, et ledit tronçon de tube constituant, dans sa position inclinée, un déflecteur d'un objet transporté, tel qu'une cartouche, vers un récipient de réception de cet objet selon un trajet de réception.

Dans une telle station, connue par exemple du brevet belge n° 721.010, le tronçon de tube pivotant se trouve normalement, en position de repos, en alignement avec un tube de transport de l'installation pour permettre le passage des objets transportés, en particulier des cartouches, à travers la station. Pour la réception ou l'expédition d'un objet, le tronçon de tube est amené à une position inclinée par rapport au tube de transport de façon à dégager l'extrémité inférieure du tube de transport de l'installation débouchant dans ladite station, en constituant en même temps, dans cette position inclinée, un déflecteur d'un objet reçu vers un bac de réception.

Lorsque les objets transportés arrivent dans la station à des vitesses élevées, et notamment lorsqu'ils présentent un poids important comme dans le cas d'une cartouche chargée, l'impact d'un objet sur le flanc du tube incliné est accompagné d'un choc important produisant un bruit particulièrement gênant. Ce choc peut être affaibli en prévoyant une garniture amortissante sur le flanc du tube pivotant entrant en contact avec l'objet reçu. Mais lorsque l'objet tombe ensuite dans un bac de réception, un nouveau choc se produit, entraînant non seulement des bruits gênants, mais également le risque d'endommager d'éventuels objets reposant au fond du bac de réception, notamment des cartouches arrivées auparavant, dans le cas d'une installation de transport pneumatique de cartouches.

La présente invention vise à pallier ces inconvénients en réduisant à un niveau acceptable le bruit provoqué lors d'une opération de réception et en évitant tout risque d'endommagement ou de bris d'un objet contenu dans le bac de réception lors de la réception d'un nouvel objet.

L'invention offre une station à tronçon de tube pivotant pour une installation de transport pneumatique, le tronçon de tube pivotant étant mobile entre une position de passage en alignement avec un tube de transport de l'installation et une position de réception ou d'expédition inclinée par rapport au tube de transport, et ledit tronçon de tube constituant, dans sa position inclinée, un déflecteur d'un objet transporté tel qu'une cartouche, vers un récipient

0182151

-3-

de réception de cet objet selon un trajet de réception,
la station comprenant un organe de freinage progressif
du mouvement d'un objet reçu qui est associé au tronçon
de tube pivotant, cet organe de freinage étant mobile en
synchronisme avec le mouvement du tronçon de tube pivotant
entre une position de freinage dans laquelle il forme,
avec le tronçon de tube pivotant devenu déflecteur dans sa
position inclinée, un étranglement dudit trajet de réception, et une position de dégagement dudit trajet de réception qu'il prend lorsque le tronçon de tube pivotant est
dans sa position alignée avec le tube de transport. Suivant l'invention, l'organe de freinage constituant de préférence un tronçon de goulotte de section sensiblement en
U, présente deux joues opposées en une matière élastiquement déformable et formant une ouverture évasée dirigée
vers ledit trajet de réception. Dans une réalisation avantageuse de l'invention, le tronçon de goulotte est agencé
à côté du tronçon de tube pivotant en ayant sa dimension
longitudinale généralement orientée selon ledit trajet de
réception. De préférence, la goulotte présente un fond
équipé d'une garniture d'amortissement.

Dans une autre forme de réalisation avantageuse de l'invention, le tronçon de goulotte est monté pivotant autour
d'un axe fixe, et le mouvement de pivotement de la goulotte
est antagoniste à celui du tronçon de tube pivotant. Dans
ce cas, le mouvement de pivotement de la goulotte est de
préférence commandé à partir d'un mécanisme d'entraînement
prévu pour actionner le tronçon de tube pivotant. Lorsque
le mécanisme d'entraînement comporte une manivelle montée à
pivotement autour d'un axe fixe d'entraînement et une première bielle reliée à l'une de ses extrémités à l'extrémité libre de la manivelle et, à son autre extrémité, à un
pivot solidaire du tronçon de tube pivotant, la goulotte
est de préférence reliée au mécanisme d'entraînement par

-4-

une seconde bielle articulée, à l'une de ses extrémités, audit organe d'entraînement au voisinage de son extrémité aval par rapport au mouvement des objets sur leur trajet de réception et, à son autre extrémité, à la première bielle en un endroit de celle-ci voisin de son articulation à la manivelle.

Lorsque le tronçon de tube pivotant est pourvu d'une garniture déflectrice et amortissante, cette garniture coopère avec l'organe de freinage qui fait alors face à la garniture.

Ainsi, l'invention offre un moyen efficace et simple pour freiner la chute d'un objet tel qu'une cartouche sensiblement à partir du moment ou celle-ci est déviée par le flanc du tube pivotant, le freinage ayant lieu progressivement et pouvant se terminer par l'arrêt complet de la cartouche. La réception s'effectue donc en deux phases. Dans la première phase, le tube est à sa position inclinée et forme avec l'organe de freinage un étranglement du trajet de réception. Lorsqu'un objet arrive, il s'engage progressivement dans l'espace compris entre le tube pivotant et l'organe de freinage en frottant sur les parois de guidage de ceux-ci. L'énergie cinétique de l'objet peut ainsi être absorbée entièrement et en douceur par frottement. L'objet se trouve donc immobilisé entre le tube pivotant et l'organe de freinage. La deuxième phase de réception débute dès la remise du tube pivotant dans sa position alignée avec le tube de transport, l'organe de freinage étant simultanément déplacé dans une position de dégagement de l'objet. Cet objet est alors libéré et tombe tout en douceur dans le bac de réception. Aucun bruit gênant n'est produit lors de la réception d'un objet, et l'on évite tout risque d'endommagement d'autres objets reposant sur le fond du bac de réception.

D'autres détails et particularités ressortiront de la description suivante d'un exemple de réalisation de l'invention en se référant aux dessins annexés dans lesquels:

La fig. 1 présente schématiquement une station dont le tronçon de tube pivotant est à sa position alignée avec le tube de transport;

la fig. 2 montre la même station, mais le tronçon de tube pivotant étant à sa position inclinée; et

la fig. 3 est une vue en coupe suivant la ligne 3-3 de la fig. 2.

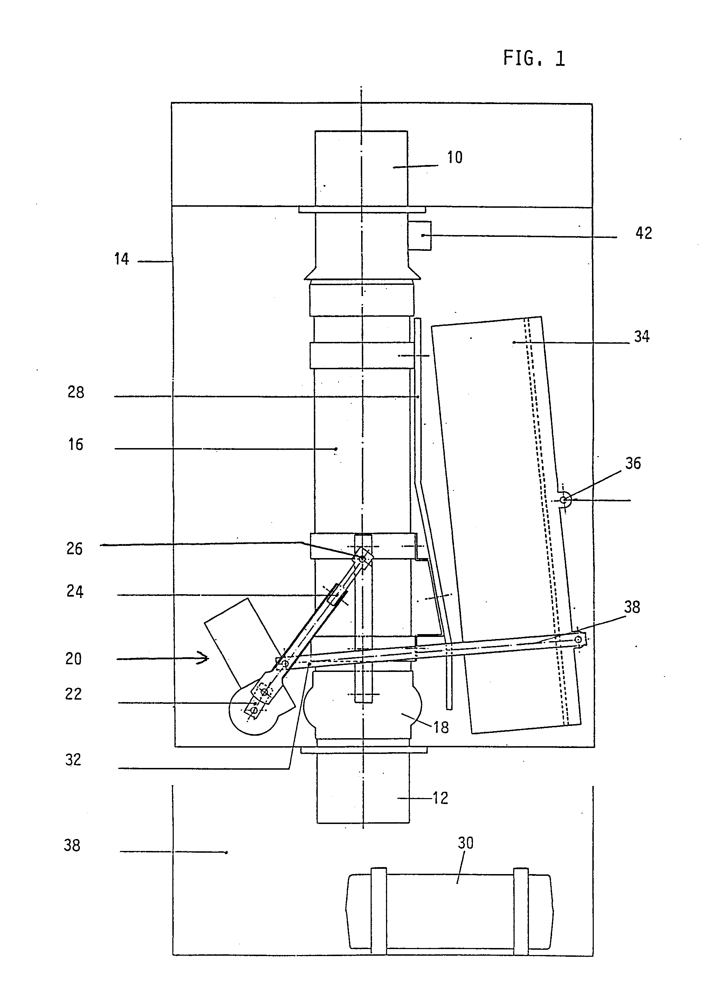

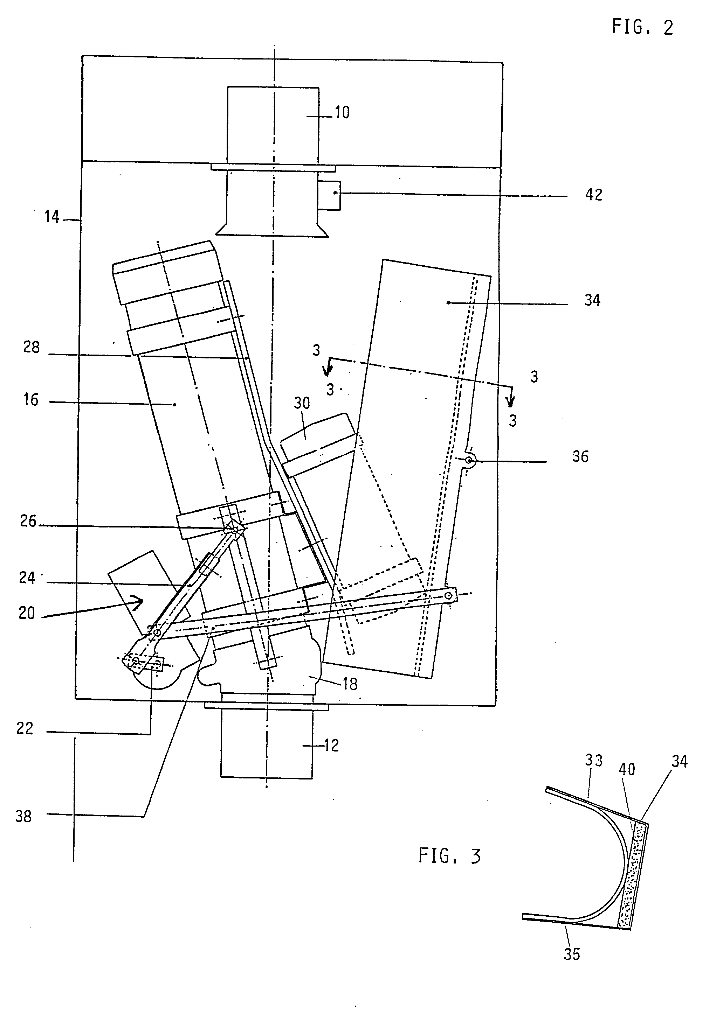

La station est intercalée dans un tube de transport pneumatique dont seulement les raccords 10, 12 sont représentés. A l'intérieur d'un boîtier 14 de la station, un tronçon de tube pivotant 16 est articulé de manière connue en soi, par l'intermédiaire d'une articulation 18, au raccord de tube 12, de manière à pouvoir effectuer un mouvement de retrait du raccord de tube 10 pour être dégagé de son ouverture débouchant dans le boîtier 14 avant d'effectuer un mouvement de pivotement dans une position inclinée vers la gauche dans les fig. 1 et 2. Ce mouvement combiné est commandé par un mécanisme d'entraînement 20 comportant un groupe moto-réducteur réversible dont l'axe d'entraînement porte une manivelle 22 sur l'extrémité libre de laquelle une première bielle 24 est articulée. L'autre extrémité de la bielle 24 est articulée sur un pivot 26 solidaire du tronçon de tube pivotant 16. Un élément déflecteur 28 est monté sur le flanc du tronçon de tube pivotant 16 sur lequel des cartouches 30 arrivent lors d'une opération de réception, lorsque le tronçon de tube pivotant 16 est à sa position inclinée. Un bac de réception 32 est représenté très schématiquement en dessous du boîtier 14.

Un tronçon de goulotte 34 formant un organe de freinage est monté pivotant sur un axe fixe 36 et présente son ouverture vers le trajet de réception des cartouches 30. Le mouvement de pivotement du tronçon de goulotte 34 est commandé par le mécanisme d'entraînement 20 par l'intermédiaire d'une seconde bielle 38 articulée, à l'une de ses extrémités, au voisinage de l'extrémité inférieure du tronçon de goulotte 34 et, à son autre extrémité, sur la première bielle 24 dans le voisinage de son articulation sur la manivelle 22. Grâce au choix de la position de l'axe fixe de pivotement 36, d'une part, et des points d'articulation de la seconde bielle 34, d'autre part, l'on obtient un mouvement de pivotement du tronçon de goulotte 34 qui est antagoniste à celui du tronçon de tube pivotant 16, les deux mouvements de pivotement ayant lieu simultanément. Lorsque le tronçon de tube pivotant 16 se trouve donc à sa position inclinée représentée à la fig. 2, le tronçon de goulotte 34 est également dans une position inclinée, mais dans le sens contraire, c'est-à-dire que son extrémité supérieure est inclinée vers la droite à la fig. 2, et son extrémité inférieure est inclinée vers la gauche.

Comme il ressort de la fig. 3, le tronçon de goulotte 34 présente, en section, une forme sensiblement en U, et les deux branches 33, 35 de la goulotte forment des joues opposées en une matière élastiquement déformable, tandis que le fond de la goulotte est équipé d'une garniture 40 en une matière amortissante. Le profil de la goulotte, considéré en section, est adapté à la forme des cartouches 30.

En fonctionnement, et lors d'une opération de réception d'une cartouche 30, le tronçon de tube pivotant 16 se trouve à sa position inclinée représentée à la fig. 2. Simultanément, le tronçon de goulotte 34 se trouve à sa position inclinée en sens contraire. Le trajet de réception

0182151

de la cartouche 30, délimité entre l'élément déflecteur 28 d'une part, et le tronçon de goulotte 34, d'autre part, est donc étranglé vers le bas, en formant une sorte d'entonnoir à parois flexibles. La cartouche 30, après impact sur l'élément déflecteur 28, est dirigée vers le fond du tronçon de goulotte 34 et s'engage progressivement entre les joues 33, 35 formant les branches de la goulotte. Lors de la pénétration progressive de la cartouche 30 dans la goulotte, les joues 33, 35 sont légèrement écartées l'une de l'autre. Lorsque la cartouche 30 possède une grande énergie cinétique, elle pénètre sur le fond de la goulotte où son mouvement est arrêté en douceur par la garniture amortissante 40. La cartouche se trouve donc immobilisée entre l'élément déflecteur 28 et le tronçon de goulotte 34. Ainsi se termine la première phase d'une opération de réception d'une cartouche.

La deuxième phase d'une opération de réception d'une cartouche est déclenchée par exemple par le passage de la cartouche devant un détecteur 42 associé à l'extrêmité du raccord de tube 10. Le détecteur 42 commande l'action du mécanisme d'entraînement 20 pour ramener le tronçon de tube pivotant 16 à sa position alignée représentée à la fig. 1, et simultanément ramener le tronçon de goulotte 34 dans une position dite de dégagement. Dans cette position de dégagement, l'extrémité inférieure du tronçon de goulotte 34 est écartée de l'élément déflecteur 28, de telle sorte qu'une cartouche 30 qui était retenue entre l'extrémité inférieure du tronçon de goulotte 34 et la partie inférieure de l'élément déflecteur 28, est libérée pour tomber en douceur sur le fond du bac de réception 32.

Les matières dont le tronçon de goulotte 34, en particulier les branches 33, 35 et la garniture 40 de celle-ci, et l'élément déflecteur 28 sont constitués, sont convenablement choisies en fonction des objets à transporter, en particulier des cartouches 30, pour assurer un freinage progressif en douceur et donc une opération de réception aussi silencieuse que possible.

## REVENDICATIONS

1. Station à tronçon de tube pivotant (16) pour une installation de transport pneumatique, le tronçon de tube pivotant (16) étant mobile entre une position de passage en alignement avec un tube de transport (10,12) de l'installation et une position de réception ou d'expédition inclinée par rapport au tube de transport, et ledit tronçon de tube (16) constituant, dans sa position inclinée, un déflecteur d'un objet transporté, tel qu'une cartouche (30), vers un récipient de réception (32) de cet objet selon un trajet de réception, un organe de freinage (34) progressif du mouvement d'un objet reçu étant associé au tronçon de tube pivotant (16), cet organe de freinage (34) étant mobile en synchronisme avec le mouvement du tronçon de tube pivotant (16) entre une position de freinage dans laquelle il forme, avec le tronçon de tube pivotant (16) devenu déflecteur dans sa position inclinée, un étranglement dudit trajet de réception, et une position de dégagement dudit trajet de réception qu'il prend lorsque le tronçon de tube pivotant (16) est dans sa position alignée avec le tube de transport (10,12), caractérisée en ce que l'organe de freinage (34) présente deux joues opposées (33,35) en une matière élastiquement déformable et formant une ouverture évasée dirigée vers ledit trajet de réception.

2. Station suivant la revendication 1, caractérisée en ce que l'organe de freinage (34) constitue un tronçon de goulotte de section sensiblement en U et dont les deux branches constituent lesdites joues (33,35), le tronçon de goulotte (34) étant agencé à côté du tronçon de tube pivotant (16) et ayant sa dimension longitudinale généralement orientée selon ledit trajet de réception.

3. Station suivant la revendication 2, caractérisée en ce que le tronçon de goulotte (34) présente un fond équipé d'une garniture d'amortissement (40).

4. Station suivant l'une quelconque des revendications précédentes, caractérisée en ce que l'organe de freinage (34) est monté pivotant autour d'un axe fixe (36), le mouvement de pivotement de cet organe de freinage (34) étant antagoniste à celui dudit tronçon de tube pivotant (16).

5. Station suivant la revendication 4, caractérisée en ce que le mouvement de pivotement de l'organe de freinage (34) est commandé à partir d'un mécanisme d'entraînement (20) prévu pour actionner ledit tronçon de tube pivotant (16).

6. Station suivant la revendication 5, dans laquelle le mécanisme d'entraînement (20) comporte une manivelle (22) montée à pivotement autour d'un axe d'entraînement et une première bielle (24) reliée à l'une de ses extrémités à l'extrémité libre de la manivelle (22) et, à son autre extrémité, à un pivot (26) solidaire du tronçon de tube pivotant (16), caractérisée en ce que l'organe de freinage (34) est relié au mécanisme d'entraînement (20) par une seconde bielle (38) articulée, à l'une de ses extrémités, audit organe d'entraînement (34) au voisinage de son extrémité aval par rapport au mouvement des objets (30) sur leur trajet de réception et, à son autre extrémité, à ladite première bielle (24) en un endroit de celle-ci voisin de son articulation à ladite manivelle (22).

7. Station suivant l'une quelconque des revendications précédentes, caractérisée en ce que l'organe de freinage (34) coopère avec une garniture déflectrice (28) solidaire du tronçon de tube pivotant (16) et faisant face audit organe de freinage (34).

FIG. 1

0182151

FIG. 2

10

42

14

34

28

16

3

3

3

3

30

36

26

24

20

18

22

12

38

FIG. 3

33 40 34

35

Office européen
des brevets

**RAPPORT DE RECHERCHE EUROPEENNE**

0182151

Numéro de la demande

EP 85 11 3740

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 31 919 (BRISBANE) <br> * Page 1, colonne 1, lignes 17-29; page 2, colonne 1, lignes 24-28; figures 1,5 * | 1,3 | B 65 G 51/20 <br> B 65 G 51/32 |
| | --- | | |
| A | DE-C- 578 302 (MAUCH) <br> * En entier * | 1 | |
| | ----- | | |

DOMAINES TECHNIQUES
RECHERCHES (Int. Cl.4)

B 65 G

Le présent rapport de recherche a été établi pour toutes les revendications

| Lieu de la recherche | Date d'achèvement de la recherche | Examinateur |
|---|---|---|
| LA HAYE | 11-02-1986 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82